# EUROPÄISCHE PATENTSCHRIFT

(11) **EP 2 687 358 B1**
(45) Veröffentlichungstag und Bekanntmachung des Hinweises auf die Patenterteilung: **18.11.2015**
(21) Anmeldenummer: 13171162.4
(22) Anmeldetag: 10.06.2013
(51) Int. Cl.: B29D 30/00, B29D 30/20, B29D 30/24, B29D 30/30, B60C 19/08

(54) **Verfahren zur Herstellung von Fahrzeugreifen**
Method for manufacturing vehicle tyres
Procédé de fabrication de pneus de véhicule

(30) Priorität: 18.07.2012 DE 102012106464
(43) Veröffentlichungstag der Anmeldung: 22.01.2014
(73) Patentinhaber: Continental Reifen Deutschland GmbH, 30165 Hannover (DE)
(72) Erfinder: Kastens, Sven, 30890 Barsinghausen (DE); Thomfohrde, Claudia, 38542 Leiferde (DE); Kneussel, Ewald, 30890 Barsinghausen (DE)
(74) Vertreter: Widjaja, Wira

(56) Entgegenhaltungen:
- EP-A1- 2 418 104
- EP-A2- 1 304 212
- EP-A2- 1 481 791
- EP-A2- 1 621 328
- WO-A1-2009/081220
- DE-A1-102009 026 164

## Beschreibung

Die Erfindung betrifft ein Verfahren zur Herstellung von Fahrzeugreifen.

Bei einer Art der Herstellung von Fahrzeugreifen wird dieser so hergestellt, dass insbesondere der Laufstreifen in Form von schmalen Gummistreifen bzw. Materialstreifen auf den Reifenrohling, der sich auf einer Reifenaufbautrommel befindet, aufgespult wird. Die Gummistreifen, die aus einer Rohgummimischung bestehen, werden direkt vor dem Aufspulprozess mit einem Extruder erzeugt.
Die WO 2009/081220 A1, EP 1 621 328 A2, EP 1 481 791 A2, DE 10 2009 026164 A1, EP 1 304 212 A2 und EP 2 418 104 A1 offenbaren bekannte Verfahren zur Herstellung von Fahrzeugreifen.

Ein Nachteil bei den bekannten Verfahren besteht darin, dass das Aufspulen der Materialstreifen direkt auf der bereits vorgeformten Reifenkarkasse aufgespult wird.
Für diesen Zweck wird die Reifenkarkasse von der Karkass-Trommel abgenommen und auf eine weitere Trommel übertragen, auf der der Spulprozess erfolgt. Die Übertragung der Reifenkarkasse auf eine weitere Trommel kann dazu führen, dass der Wulstbereich des Reifenrohlings beschädigt wird. Außerdem ist die Übertragung einer Reifenkarkasse auf eine weitere Trommel im Allgemeinen mit Fertigungsungenauigkeiten verbunden.

Der Erfindung lag die Aufgabe zugrunde, ein Verfahren bereitzustellen, mit dem herkömmliche Verfahren zur Herstellung von Fahrzeugreifen verbessert werden. Insbesondere betrifft die Verbesserung die Herstellung von Fahrzeugreifen, bei denen der Laufstreifen mit einem Aufspulprozess erzeugt wird.

Gelöst wird die Aufgabe durch ein Verfahren mit folgenden Schritten:
a) Auflegen von mindestens einer Gürtellage auf einer beweglichen Gürteltrommel, wobei die Gürteltrommel im Wesentlichen eine zylindrische flache Oberfläche umfasst und in einer Ausgangsposition stationiert ist,
b) Bewegen der Gürteltrommel in eine weitere Position zum Aufspulen einer Spulbandage,
   wobei mit der Spulbandage der Reifengürtel überdeckt wird,
c) Bewegen der Gürteltrommel in eine weitere Position zum Aufspulen einer Materiallage mit der ein erster Teil eines Laufstreifens gebildet wird,
d) Bewegen der Gürteltrommel in eine weitere Position zum Aufspulen einer Materiallage mit der ein zweiter Teil des Laufstreifens gebildet wird,
e) Bewegen der Gürteltrommel in eine weitere Position zum Aufbringen eines weiteren Reifenbauteiles,
f) Bewegen der Gürteltrommel in eine weitere Position zur Entnahme des hergestellten Gürtel-Laufstreifenpaketes mit einer Transport-Vorrichtung,
g) Übergabe des Gürtel-Laufstreifen-Paketes an eine Bombiertrommel,
   wobei mit der Bombiertrommel eine Reifenkarkasse mit dem Gürtel-Laufstreifenpaket vereinigt wird,
h) Fertigstellen des Fahrzeugreifens mit einem konventionellen Herstellverfahren.

Ein Vorteil der Erfindung ist insbesondere darin zu sehen, dass durch das erfindungsgemäße Verfahren der Aufspulvorgang zur Erzeugung des Laufstreifens direkt auf einer konventionellen Gürteltrommel mit einer zylindrischen Form erfolgen kann. Dadurch entfällt ein aufwendiges Übertragen der Reifenkarkasse auf eine weitere Reifenaufbautrommel. Der Aufspulprozess zur Erzeugung des Laufstreifens erfolgt direkt über dem bereits aufgelegten Gürtellagen und der Spulbandage, die als erstes auf der Gürteltrommel aufgewickelt werden. Anschließend erfolgt ein präzises Aufspulen des Laufstreifens an mindestens zwei Positionen. Die Gürteltrommel wird mit der Antriebsvorrichtung an mehreren Positionen vorbeigeführt, an denen jeweils unterschiedliche Reifenbauteile auf der Gürteltrommel angeordnet werden. Da an den einzelnen Positionen jeweils parallel ein Gürtellaufreifenpaket erzeugt wird, wird die Zykluszeit insgesamt reduziert.

In einer vorteilhaften Weiterbildung der Erfindung ist vorgesehen, dass die Schritte c) und d) mit einem Spulprozess erfolgen bei dem ein schmaler Materialstreifen mit einer Spulvorrichtung spiralförmig über die Spulbandage aufgespult wird,
wobei mit den aufgespulten Materialstreifen die Außenkontur des Laufstreifens geformt wird.
Durch diesen Spulvorgang lässt sich ein Laufstreifen ohne Spleiss bzw- ohne eine Material-Überlappung erzeugen.

In einer weiteren vorteilhaften Weiterbildung der Erfindung ist vorgesehen, dass die Gürteltrommel mit einer Antriebsvorrichtung gekoppelt ist und die Antriebsvorrichtung zwischen den einzelnen Positionen zum Auflegen von Reifenbauteilen im Wesentlichen in einem Rechteck verfahren wird.
Auf diese Weise können die einzelnen Positionen bzw. Stationen zum Anordnen von unterschiedlichen Reifenbauteilen platzsparend angeordnet werden. Mit der Anordnung ist ebenfalls eine Verkürzung der Zykluszeit verbunden.

In einer weiteren vorteilhaften Weiterbildung der Erfindung ist vorgesehen, dass die Antriebsvorrichtung mit der Gürteltrommel auf einem Schienensystem zwischen den einzelnen Positionen im Kreis bewegt wird.
Mit einem solchen Schienensystem können die Gürteltrommeln mit der Antriebsvorrichtung schnell zwischen den einzelnen Positionen bewegt werden.

In einer weiteren vorteilhaften Weiterbildung der Erfindung ist vorgesehen, dass an mehreren Positionen gleichzeitig ein Gürtel-Laufstreifenpaket hergestellt wird.
Dadurch können mit dem Verfahren immer eine ausreichende Anzahl von Gürtellaufstreifenpaketen bereitgestellt werden.

In einer weiteren vorteilhaften Weiterbildung der Erfindung ist vorgesehen, dass nach Schritt d) in einer weiteren Position ein weiterer Teil des Laufstreifens aufgespult wird, wobei bei Schritt d) der erste Teil der cap-Lage und im nachfolgenden Schritt der zweite Teil der cap-Lage aufgespult wird.
Dadurch können die beiden cap-Lagen aus unterschiedlichen Gummimischungen bestehen.

In einer weiteren vorteilhaften Weiterbildung der Erfindung ist vorgesehen, dass nach Schritt d) in einer weiteren Position ein weiterer Teil des Laufstreifens in Form eines elektrisch leitfähigen Gummimaterials aufgespult wird.
Dadurch wird auf einfache Weise eine elektrische Leitfähigkeit des Fahrzeugreifens sichergestellt.

In einer weiteren vorteilhaften Weiterbildung der Erfindung ist vorgesehen, dass das fertig gestellte Gürtel-Laufstreifenpaket bei Schritt f) in der Ausgangsposition von der Gürteltrommel abgenommen wird.
Dadurch wird auf einfache Weise eine zusätzliche Position eingespart, in der das Gürtellaufstreifenpaket von der Gürteltrommel abgenommen wird.

In einer weiteren vorteilhaften Weiterbildung der Erfindung ist vorgesehen, dass bei Schritt
a) in der Ausgangsposition mindestens zwei Gürtellagen nacheinander auf der Gürteltrommel übereinander aufgelegt werden, wobei die Gürteltrommel seine Position nicht verändert.
   Dadurch wird nur eine Position benötigt, um beide Gürtellagen auf der Gürteltrommel aufzuwickeln.

In einer weiteren vorteilhaften Weiterbildung der Erfindung ist vorgesehen, dass nach Schritt g) beim Bombiervorgang das in radialer Richtung obere Ende der Seitenwände über die axial äußeren Bereiche des Gürtel-Laufstreifenpaketes angeordnet werden.
Auf diese Weise können Fahrzeugreifen hergestellt werden, die verbesserte Fahreigenschaften aufweisen.

Anhand eines Ausführungsbeispiels soll die Erfindung näher erläutert werden. Es zeigt:

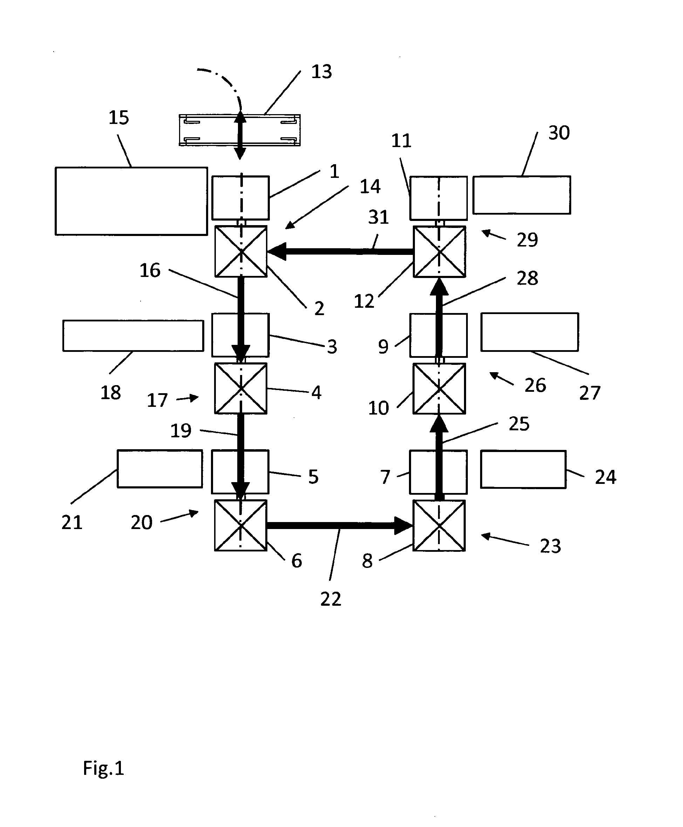

- Fig. 1:: ein Ausführungsbeispiel des erfindungsgemäßen Verfahrens

Die Figur 1 zeigt ein Ausführungsbeispiel des Verfahrens.

Die einzelnen Positionen bzw. Stationen, an denen unterschiedliche Reifenbauteile auf der Gürteltrommel angeordnet werden, sind in einer Aufsicht dargestellt. An der ersten Position 14 erfolgt das Aufwickeln der ersten und zweiten Gürtellage auf der Gürteltrommel 1. Die Gürteltrommel 1 ist mit einer Antriebsvorrichtung 2 gekoppelt, die insbesondere die rotierende Bewegung der Gürteltrommel 1 antreibt. Die Vorrichtung 15 ist ein Servicer für die erste und zweite Gürtellage. Nach dem Aufwickeln der Gürtellagen auf der Gürteltrommel 1 bewegt sich die Gürteltrommel 1 mit der Antriebsvorrichtung 2 in die zweite Position 17. An dieser zweiten Position erfolgt das Aufspulen der Spulbandage mit der Vorrichtung 18. Die Aufsicht in der Fig. 1 zeigt insgesamt sechs Gürteltrommeln 1, 3, 5, 7, 9 und 11, die sich nacheinander zwischen den Positionen im Kreis bewegen. Die Antriebsvorrichtungen sind auf einem Schienensystem angeordnet, wodurch die Gürteltrommeln mit einer hohen Geschwindigkeit zwischen den einzelnen Positionen bewegt werden können. Der Pfeil 19 zeigt die Bewegung der Gürteltrommel 4 in die dritte Position 20 zum Aufspulen des ersten Teiles des Laufstreifens in Form der base-Lage. Der Aufspulvorgang erfolgt mit der Vorrichtung 21, wobei ein dünner Materialstreifen über die Spulbandage aufgespult wird. Anschließend erfolgt die Bewegung 22 der Gürteltrommel 6 in die vierte Position 23 zum Aufspulen des zweiten Teiles des Laufstreifens in Form der ersten cap-Lage. Dieser Aufspulprozess erfolgt mit der Vorrichtung 24. Anschließend wird die Gürteltrommel 7 mit der Antriebsvorrichtung 8 über die Bewegung 25 in die fünfte Position 26 bewegt. In der Position 26 erfolgt das Aufspulen des zweiten Teils des Laufstreifens in Form der zweiten cap-Lage.
Der Aufspulvorgang erfolgt durch die Vorrichtung 27, die die zweite cap-Lage auf die Gürteltrommel 9 aufspult. Anschließend erfolgt eine Bewegung 28 in die sechste Position 29, an der das Aufspulen des elektrisch leitfähigen Gummimaterials erfolgt. Der entsprechende Aufspulvorgang erfolgt mit der Vorrichtung 30 auf die Gürteltrommel 11. Nach diesem Aufspulvorgang wird die Gürteltrommel 11 mit der Antriebsvorrichtung 12 über die Bewegung 31 in die Ausgangsposition 14 bewegt. Das fertig hergestellte Gürtellaufstreifenpaket wird anschließend mit der Transportvorrichtung 13 von der Gürteltrommel 1 genommen. Anschließend wird das abgenommene Gürtellaufstreifenpaket mit der Vorrichtung 13 über eine nicht dargestellte Bombiertrommel verfahren. An dieser Bombiertrommel wird die Reifenkarkasse mit dem Gürtellaufstreifenpaket vereinigt und damit der Reifenrohling fertiggestellt.

### Bezugszeichenliste

(ist Teil der Beschreibung)
- 1: Gürteltrommel 1
- 2: Antriebsvorrichtung für Gürteltrommel 1
- 3: Gürteltrommel 2
- 4: Antriebsvorrichtung für Gürteltrommel 2
- 5: Gürteltrommel 3
- 6: Antriebsvorrichtung für Gürteltrommel 3
- 7: Gürteltrommel 4
- 8: Antriebsvorrichtung für Gürteltrommel 4
- 9: Gürteltrommel 5
- 10: Antriebsvorrichtung für Gürteltrommel 5
- 11: Gürteltrommel 6
- 12: Antriebsvorrichtung für Gürteltrommel 6
- 13: Transportvorrichtung für Gürtel-Laufstreifen-Paket
- 14: erste Position zum Aufwickeln der Gürtellagen
- 15: Servicer für Gürtellagen
- 16: Bewegung in zweite Position
- 17: zweite Position zum Aufspulen der Spulbandage
- 18: Vorrichtung zum Aufspulen der Spulbandage
- 19: Bewegung in dritte Position
- 20: dritte Position zum Aufspulen des ersten Teiles des Laufstreifens in Form der base-Lage
- 21: Vorrichtung zum Aufspulen der base-Lage
- 22: Bewegung in vierte Position
- 23: vierte Position zum Aufspulen des zweiten Teiles des Laufstreifens in Form der ersten cap-Lage
- 24: Vorrichtung zum Aufspulen der ersten cap-Lage
- 25: Bewegung in fünfte Position
- 26: fünfte Position zum Aufspulen des zweiten Teiles des Laufstreifens in Form der zweiten cap-Lage
- 27: Vorrichtung zum Aufspulen der zweiten cap-Lage
- 28: Bewegung in sechste Position
- 29: sechste Position zum Aufspulen des elektrisch leitfähigen Gummimaterials
- 30: Vorrichtung zum Aufspulen des elektrisch leitfähigen Gummimaterials
- 31: Bewegung in erste Position

## Patentansprüche

1. Verfahren zur Herstellung von Fahrzeugreifen, mit folgenden Schritten:
a) Auflegen von mindestens einer Gürtellage auf einer beweglichen Gürteltrommel (1, 3,5,7,9,11),
wobei die Gürteltrommel (1, 3, 5, 7, 9, 11) im Wesentlichen eine zylindrische flache Oberfläche umfasst und in einer Ausgangsposition (14) stationiert ist,
b) Bewegen der Gürteltrommel (1, 3, 5, 7, 9, 11) in eine weitere Position (17) zum Aufspulen einer Spulbandage,
wobei mit der Spulbandage der Reifengürtel überdeckt wird,
c) Bewegen der Gürteltrommel (1, 3, 5, 7, 9, 11) in eine weitere Position (20) zum Aufspulen einer Materiallage mit der ein erster Teil eines Laufstreifens gebildet wird,
d) Bewegen der Gürteltrommel (1, 3, 5, 7, 9, 11) in eine weitere Position (23) zum Aufspulen einer Materiallage mit der ein zweiter Teil des Laufstreifens gebildet wird,
e) Bewegen der Gürteltrommel (1, 3, 5, 7, 9, 11) in eine weitere Position (29) zum Aufbringen eines weiteren Reifenbauteiles,
f) Bewegen der Gürteltrommel (1, 3, 5, 7, 9, 11) in eine weitere Position (14) zur Entnahme des hergestellten Gürtel-Laufstreifenpaketes mit einer Transport-Vorrichtung (13),
g) Übergabe des Gürtel-Laufstreifen-Paketes an eine Bombiertrommel,
wobei mit der Bombiertrommel eine Reifenkarkasse mit dem Gürtel-Laufstreifenpaket vereinigt wird,
h) Fertigstellen des Fahrzeugreifens mit einem konventionellen Herstellverfahren.

2. Verfahren nach Anspruch 1,
**dadurch gekennzeichnet, dass**
die Schritte c) und d) mit einem Spulprozess erfolgen bei dem ein schmaler Materialstreifen mit einer Spulvorrichtung (21, 24, 27) spiralförmig über die Spulbandage aufgespult wird,
wobei mit den aufgespulten Materialstreifen die Außenkontur des Laufstreifens geformt wird.

3. Verfahren nach einem der vorhergehenden Ansprüche,
**dadurch gekennzeichnet, dass**
die Gürteltrommel (1, 3, 5, 7, 9, 11) mit einer Antriebsvorrichtung (2, 4, 6, 8, 10, 12) gekoppelt ist und die Antriebsvorrichtung (2, 4, 6, 8, 10, 12) zwischen den einzelnen Positionen zum Auflegen von Reifenbauteilen im Wesentlichen in einem Rechteck verfahren wird.

4. Verfahren nach einem der vorhergehenden Ansprüche,
**dadurch gekennzeichnet, dass**
die Antriebsvorrichtung (2, 4, 6, 8, 10, 12) mit der Gürteltrommel (1, 3, 5, 7, 9, 11) auf einem Schienensystem zwischen den einzelnen Positionen (14, 17, 20, 23, 26, 29) im Kreis bewegt wird.

5. Verfahren nach einem der vorhergehenden Ansprüche,
**dadurch gekennzeichnet, dass**
an mehreren Positionen (14, 17, 20, 23, 26, 29) gleichzeitig ein Gürtel-Laufstreifenpaket hergestellt wird.

6. Verfahren nach einem der vorhergehenden Ansprüche,
**dadurch gekennzeichnet, dass**
nach Schritt d) in einer weiteren Position (26) ein weiterer Teil des Laufstreifens aufgespult wird, wobei bei Schritt d) der erste Teil der cap-Lage und im nachfolgenden Schritt der zweite Teil der cap-Lage aufgespult wird.

7. Verfahren nach einem der vorhergehenden Ansprüche,
**dadurch gekennzeichnet, dass**
nach Schritt d) in einer weiteren Position (29) ein weiterer Teil des Laufstreifens in Form eines elektrisch leitfähigen Gummimaterials aufgespult wird.

8. Verfahren nach einem der vorhergehenden Ansprüche,
**dadurch gekennzeichnet, dass**
das fertig gestellte Gürtel-Laufstreifenpaket bei Schritt f) in der Ausgangsposition (14) von der Gürteltrommel (1, 3, 5, 7, 9, 11) abgenommen wird.

9. Verfahren nach einem der vorhergehenden Ansprüche,
**dadurch gekennzeichnet, dass**
bei Schritt a) in der Ausgangsposition (14) mindestens zwei Gürtellagen nacheinander auf der Gürteltrommel (1, 3, 5, 7, 9, 11) übereinander aufgelegt werden,
wobei die Gürteltrommel (1, 3, 5, 7, 9, 11) seine Position nicht verändert.

10. Verfahren nach einem der vorhergehenden Ansprüche,
**dadurch gekennzeichnet, dass**
nach Schritt g) beim Bombiervorgang das in radialer Richtung obere Ende der Seitenwände über die axial äußeren Bereiche des Gürtel-Laufstreifenpaketes angeordnet werden.

## Claims

1. Method for manufacturing vehicle tyres, with the following steps:
a) placing at least one belt ply on a movable belt drum (1, 3, 5, 7, 9, 11),
wherein the belt drum (1, 3, 5, 7, 9, 11) substantially comprises a cylindrical flat surface and is stationed in a starting position (14),
b) moving the belt drum (1, 3, 5, 7, 9, 11) into a further position (17) for winding up a wound bandage,
wherein the tyre belt is covered over with the wound bandage,
c) moving the belt drum (1, 3, 5, 7, 9, 11) into a further position (20) for winding up a material ply with which a first part of the tread is formed,
d) moving the belt drum (1, 3, 5, 7, 9, 11) into a further position (23) for winding up a material ply with which a second part of the tread is formed,
e) moving the belt drum (1, 3, 5, 7, 9, 11) into a further position (29) for applying a further tyre component,
f) moving the belt drum (1, 3, 5, 7, 9, 11) into a further position (14) for removing the produced belt-tread assembly by a transporting device (13),
g) transferring the belt-tread assembly to a shaping drum,
wherein a tyre carcass is brought together with the belt-tread assembly by the shaping drum,
h) completing the vehicle tyre by a conventional manufacturing method.

2. Method according to Claim 1,
**characterized in that**
steps c) and d) are performed by a winding process, in which a narrow strip of material is wound up spirally over the wound bandage by a winding device (21, 24, 27),
wherein the outer contour of the tread is formed by the wound-up strip of material.

3. Method according to one of the preceding claims,
**characterized in that**
the belt drum (1, 3, 5, 7, 9, 11) is coupled with a drive device (2, 4, 6, 8, 10, 12) and the drive device (2, 4, 6, 8, 10, 12) is moved substantially in a rectangle between the individual positions for placing on tyre components.

4. Method according to one of the preceding claims,
**characterized in that**
the drive device (2, 4, 6, 8, 10, 12) with the belt drum (1, 3, 5, 7, 9, 11) is moved in a circle on a rail system between the individual positions (14, 17, 20, 23, 26, 29).

5. Method according to one of the preceding claims,
**characterized in that**
a belt-tread assembly is produced at a number of positions (14, 17, 20, 23, 26, 29) simultaneously.

6. Method according to one of the preceding claims,
**characterized in that**
after step d), a further part of the tread is wound up in a further position (26), wherein the first part of the cap ply is wound up in step d) and the second part of the cap ply is wound up in the subsequent step.

7. Method according to one of the preceding claims,
**characterized in that**
after step d), a further part of the tread is wound up in the form of an electrically conductive rubber material in a further position (29).

8. Method according to one of the preceding claims,
**characterized in that**
in step f), the completed belt-tread assembly is taken off the belt drum (1, 3, 5, 7, 9, 11) in the starting position (14).

9. Method according to one of the preceding claims,
**characterized in that**
in step a), at least two belt plies are placed one after the other on top of one another on the belt drum (1, 3, 5, 7, 9, 11) in the starting position (14),
wherein the belt drum (1, 3, 5, 7, 9, 11) does not change its position.

10. Method according to one of the preceding claims,
**characterized in that**
after step g), the upper end of the sidewalls in the radial direction is arranged over the axially outer regions of the belt-tread assembly during the shaping operation.

## Revendications

1. Procédé de fabrication de pneus de véhicule, comprenant les étapes suivantes:
a) dépôt d'au moins une couche de ceinture sur un tambour de ceinture mobile (1, 3, 5, 7, 9, 11), dans lequel le tambour de ceinture (1, 3, 5, 7, 9, 11) comprend essentiellement une surface cylindrique et est stationné dans une position initiale (14),
b) déplacement du tambour de ceinture (1, 3, 5, 7, 9, 11) dans une autre position (17) pour l'enroulement d'un bandage enroulé, dans lequel la ceinture de pneu est recouverte avec le bandage enroulé,
c) déplacement du tambour de ceinture (1, 3, 5, 7, 9, 11) dans une autre position (20) pour l'enroulement d'une couche de matière avec laquelle une première partie de la bande de roulement est formée,
d) déplacement du tambour de ceinture (1, 3, 5, 7, 9, 11) dans une autre position (23) pour l'enroulement d'une couche de matière avec laquelle une deuxième partie de la bande de roulement est formée,
e) déplacement du tambour de ceinture (1, 3, 5, 7, 9, 11) dans une autre position (29) pour l'application d'un autre composant du pneu,
f) déplacement du tambour de ceinture (1, 3, 5, 7, 9, 11) dans une autre position (14) pour l'enlèvement du paquet ceinture-bande de roulement avec un dispositif de transport (13),
g) transfert du paquet ceinture-bande de roulement à un tambour de galbage, dans lequel une carcasse de pneu est réunie au paquet ceinture-bande de roulement avec le tambour de galbage,
h) achèvement du pneu de véhicule avec un procédé de fabrication conventionnel.

2. Procédé selon la revendication 1, **caractérisé en ce que** les étapes c) et d) sont effectuées avec un processus d'enroulement dans lequel une étroite bande de matière est enroulée en forme de spirale sur le bandage enroulé avec un dispositif d'enroulement (21, 24, 27), dans lequel le contour extérieur de la bande de roulement est formé avec les bandes de matière enroulées.

3. Procédé selon l'une quelconque des revendications précédentes, **caractérisé en ce que** le tambour de ceinture (1, 3, 5, 7, 9, 11) est couplé à un dispositif d'entraînement (2, 4, 6, 8, 10, 12) et le dispositif d'entraînement (2, 4, 6, 8, 10, 12) est déplacé essentiellement suivant un rectangle entre les positions individuelles pour le dépôt de composants du pneu.

4. Procédé selon l'une quelconque des revendications précédentes, **caractérisé en ce que** le dispositif d'entraînement (2, 4, 6, 8, 10, 12) avec le tambour de ceinture (1, 3, 5, 7, 9, 11) est déplacé en cercle sur un système de rails entre les positions individuelles (14, 17, 20, 23, 26, 29).

5. Procédé selon l'une quelconque des revendications précédentes, **caractérisé en ce qu'**un paquet ceinture-bande de roulement est fabriqué simultanément à plusieurs positions (14, 17, 20, 23, 26, 29).

6. Procédé selon l'une quelconque des revendications précédentes, **caractérisé en ce qu'**après l'étape d), une autre partie de la bande de roulement est enroulée à une autre position (26), dans lequel la première partie de la couche externe est enroulée à l'étape d) et la deuxième partie de la couche externe est enroulée à l'étape suivante.

7. Procédé selon l'une quelconque des revendications précédentes, **caractérisé en ce qu'**une autre partie de la bande de roulement sous forme de matière de caoutchouc électriquement conductrice est enroulée dans une autre position (29) après l'étape d).

8. Procédé selon l'une quelconque des revendications précédentes, **caractérisé en ce que** le paquet ceinture-bande de roulement terminé est repris du tambour de ceinture (1, 3, 5, 7, 9, 11) dans la position initiale (14) à l'étape f).

9. Procédé selon l'une quelconque des revendications précédentes, **caractérisé en ce qu'**au moins deux couches de ceinture sont déposées l'une sur l'autre l'une après l'autre sur le tambour de ceinture (1, 3, 5, 7, 9, 11) dans la position initiale (14) à l'étape a), dans lequel le tambour de ceinture (1, 3, 5, 7, 9, 11) ne change pas de position.

10. Procédé selon l'une quelconque des revendications précédentes, **caractérisé en ce qu'**après l'étape g), l'extrémité supérieure des flancs en direction radiale est disposée au-dessus des régions axialement extérieures du paquet ceinture-bande de roulement lors de l'opération de galbage.
